# EUROPEAN PATENT APPLICATION

(11) **EP 4 207 109 A1**
(43) Date of publication of application: **05.07.2023**
(21) Application number: 21860802.4
(22) Date of filing: 08.02.2021
(51) Int. Cl.: G07C 5/00

(54) **DRIVE RECORDER, CONTROL METHOD FOR DRIVE RECORDER, AND SHOOTING CONTROL PROGRAM**

(30) Priority: 25.08.2020 JP 2020141673
(71) Applicant: JVCKenwood Corporation, Yokohama-shi, Kanagawa 2210022 (JP)
(72) Inventor: SUZUKI Tsuyoshi, Yokohama-shi, Kanagawa 221-0022 (JP); AIZU Naoya, Yokohama-shi, Kanagawa 221-0022 (JP); OGAWA Hideaki, Yokohama-shi, Kanagawa 221-0022 (JP); MATSUMOTO Eiji, Yokohama-shi, Kanagawa 221-0022 (JP); KURASHIGE Norio, Yokohama-shi, Kanagawa 221-0022 (JP)
(74) Representative: Potter Clarkson
(86) International application number: PCT/JP2021/004497
(87) International publication number: WO 2022/044370

(57) **Abstract**

A dashboard camera (11) according to one aspect of this embodiment includes: an event detection unit (111) configured to detect an event that has occurred in an own vehicle; an imaging control unit (112) configured to switch, when the event has been detected by the event detection unit (111), imaging conditions of an imaging apparatus that captures images of an area including the interior of the vehicle from imaging conditions appropriate for the environment inside the vehicle to imaging conditions appropriate for the environment outside the vehicle; and a recording control unit (115) configured to cause a recording apparatus to record the video images captured by the imaging apparatus.

## Description

### Technical Field

The present invention relates to a dashboard camera, a method for controlling the dashboard camera, and an imaging control program, and relates to, for example, a dashboard camera suitable for effectively recording a scene outside a vehicle, a method for controlling the dashboard camera, and an imaging control program.

### Background Art

In general, vehicles are equipped with dashboard cameras (dashcams) for capturing images near vehicles and recording the captured images. The captured video images recorded by the dashboard cameras are used, for example, to help to investigate the cause of a vehicle accident. A technique regarding the dashboard camera is disclosed, for example, in Patent Literature 1.

### Citation List

### Patent Literature

[Patent Literature 1] Japanese Unexamined Patent Application Publication No. 2019-128744

### Summary of Invention

However, with the configuration disclosed in Patent Literature 1, it is not always possible to capture images of an area outside a vehicle under imaging conditions appropriate for the environment outside the vehicle when an abnormality occurs. In this case, there is a problem that it is impossible to effectively capture a scene outside the vehicle and record this scene.

The present invention has been made in view of the aforementioned problem and an aim of the present invention is to provide a dashboard camera suitable for effectively recording a scene outside a vehicle, a method for controlling the dashboard camera, and an imaging control program.

A dashboard camera according to one aspect of this embodiment includes: an event detection unit configured to detect an event that has occurred in an own vehicle; an imaging control unit configured to switch, when the event has been detected by the event detection unit, imaging conditions of an imaging apparatus that captures images of an area including the interior of the vehicle from imaging conditions appropriate for the environment inside the vehicle to imaging conditions appropriate for the environment outside the vehicle; and a recording control unit configured to cause a recording apparatus to record the video images captured by the imaging apparatus.

A method for controlling a dashboard camera according to one aspect of this embodiment includes the steps of: detecting an event that has occurred in an own vehicle; switching, when the event has been detected, imaging conditions of an imaging apparatus that captures images of an area including the interior of the vehicle from imaging conditions appropriate for the environment inside the vehicle to imaging conditions appropriate for the environment outside the vehicle; and causing a recording apparatus to record the video images captured by the imaging apparatus.

An imaging control program according to one aspect of this embodiment causes a computer to execute: detecting an event that has occurred in an own vehicle; switching, when the event has been detected, imaging conditions of an imaging apparatus that captures images of an area including the interior of the vehicle from imaging conditions appropriate for the environment inside the vehicle to imaging conditions appropriate for the environment outside the vehicle; and causing a recording apparatus to record the video images captured by the imaging apparatus.

According to this embodiment, it is possible to provide a dashboard camera suitable for effectively recording a scene outside a vehicle, a method for controlling the dashboard camera, and an imaging control program.

### Brief Description of Drawings

Fig. 1 is a block diagram showing a configuration example of an in-vehicle monitoring system on which a dashboard camera according to a first embodiment is mounted;
Fig. 2 is a flowchart showing an operation of the dashboard camera provided in the in-vehicle monitoring system shown in Fig. 1;
Fig. 3 is a block diagram showing a modified example of the in-vehicle monitoring system shown in Fig. 1; and
Fig. 4 is a block diagram showing a hardware configuration example of an imaging control function of the dashboard camera according to the first embodiment.

### Description of Embodiments

Hereinafter, with reference to the drawings, a specific embodiment to which the present invention is applied will be described in detail. Throughout the drawings, the same components are denoted by the same reference symbols and duplicate explanations will be omitted as necessary for the sake of clarity of the description.

### <First Embodiment>

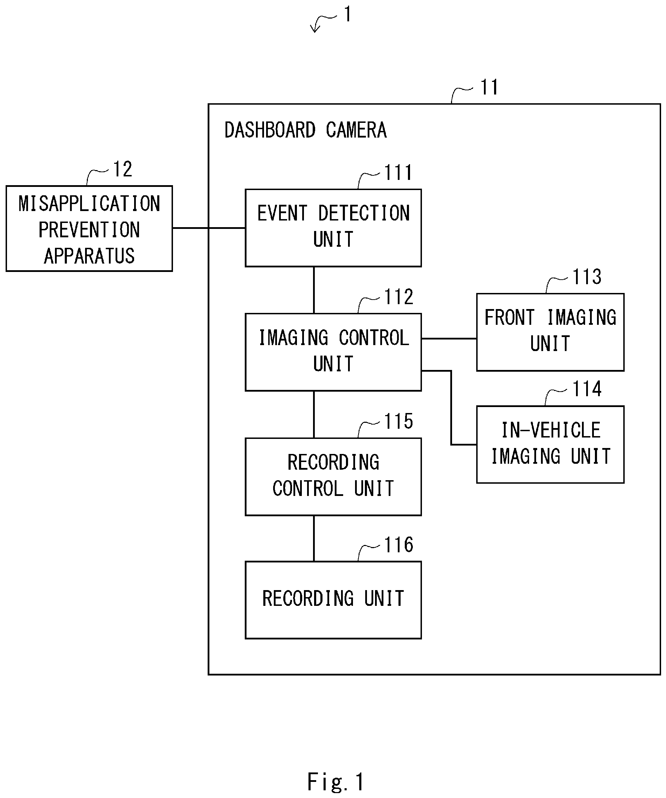

Fig. 1 is a block diagram showing a configuration example of an in-vehicle monitoring system 1 on which a dashboard camera 11 according to a first embodiment is mounted. The dashboard camera 11 according to this embodiment switches imaging conditions of an imaging apparatus that captures images in a rear area of the vehicle, including the interior thereof, at normal times from imaging conditions appropriate for the environment inside the vehicle to imaging conditions appropriate for the environment outside the vehicle at the time of an abnormality. It is therefore possible to effectively capture a scene outside the vehicle. Hereinafter, this configuration will be specifically described.

As shown in Fig. 1, the in-vehicle monitoring system 1 includes the dashboard camera 11 and a misapplication prevention apparatus 12.

The misapplication prevention apparatus 12, which is an apparatus including a function of preventing a misapplication of at least one of an accelerator and a brake, limits the movement of an accelerator pedal when, for example, a driver is about to erroneously press the accelerator or limits the movement of a brake pedal when, for example, the driver is about to erroneously apply the brake.

The dashboard camera 11 includes an event detection unit (event detection apparatus) 111, an imaging control unit (imaging control apparatus) 112, a front imaging unit (front imaging apparatus) 113, an in-vehicle imaging unit (in-vehicle imaging apparatus) 114, a recording control unit (recording control apparatus) 115, and a recording unit (recording apparatus) 116.

The event detection unit 111 detects an event (abnormality) that has occurred in an own vehicle (a vehicle on which the dashboard camera 11 is mounted).

When a misapplication prevention operation has been performed by the misapplication prevention apparatus 12 while the driver is parking his/her vehicle in a garage, it is desirable that the area between the own vehicle and a side wall or the like of the garage be captured and recorded as it is possible that the own vehicle may collide with the side wall or the like of the garage. In another case, when a misapplication prevention operation has been performed by the misapplication prevention apparatus 12 during traveling, it is desirable that images of at least the area between the own vehicle and another vehicle traveling near the own vehicle be captured and recorded since it is possible that the own vehicle may collide with the other vehicle traveling near the own vehicle.

In order to achieve the above configuration, when the misapplication prevention operation has been performed by the misapplication prevention apparatus 12, the event detection unit 111 detects the occurrence of the misapplication prevention operation as an event that has occurred in the own vehicle.

While the case in which the event detection unit 111 detects the occurrence of the misapplication prevention operation performed by the misapplication prevention apparatus 12 as the event that has occurred in the own vehicle is described in this embodiment, this is merely an example. The event detection unit 111 may detect an event that has occurred in a part other than the misapplication prevention apparatus 12. The event detection unit 111 may detect, for example, a sudden change in the acceleration as the event that has occurred in the own vehicle.

The front imaging unit 113 captures images of a scene in front of the own vehicle. Since the front imaging unit 113 always capture images outside the vehicle, the front imaging unit 113 captures images of the area outside the vehicle under imaging conditions appropriate for the environment outside the vehicle (condition of exposure etc.).

The in-vehicle imaging unit 114 captures images of the rear area of the vehicle, including the interior thereof. Therefore, the in-vehicle imaging unit 114 may also be referred to as a rear imaging unit. The in-vehicle imaging unit 114 captures images under imaging conditions appropriate for the environment inside the vehicle (condition of exposure etc.) at normal times. Normal times are those when the occurrence of an event is not detected by the event detection unit 111. The video images of inside the vehicle captured by the in-vehicle imaging unit 114 at normal times may not only be recorded in the recording unit 116 of the dashboard camera 11, but may also be used for other purposes (e.g., displayed on a monitor of a communication partner of a videophone call).

Further, the in-vehicle imaging unit 114 is configured to be able to change imaging conditions such as a degree of exposure or change the imaging direction by an instruction from the imaging control unit 112 that will be described later. Accordingly, the in-vehicle imaging unit 114 is able to switch the imaging conditions from the imaging conditions appropriate for the environment inside the vehicle to the imaging conditions appropriate for the environment outside the vehicle at the time an abnormality occurs. The time an abnormality occurs means a case in which occurrence of an event has been detected by the event detection unit 111.

Note that the function of the in-vehicle imaging unit 114 may be applied, for example, to an imaging unit capable of capturing images of 360 degrees. In this case, this imaging unit is able to switch the conditions of imaging an area including the interior of the vehicle of the whole imaging area from the imaging conditions appropriate for the environment inside the vehicle to the imaging conditions appropriate for the environment outside the vehicle at the time of an abnormality.

Further, while the case in which one front imaging unit 113 and one in-vehicle imaging unit 114 are provided has been described in this embodiment, this is merely an example. A plurality of front imaging units 113 may be provided or a plurality of in-vehicle imaging units 114 may be provided.

Further, the front imaging unit 113 and the in-vehicle imaging unit 114 may be included in the dashboard camera 11 in advance or may be attached later.

The imaging control unit 112 controls imaging by each of the front imaging unit 113 and the in-vehicle imaging unit 114. Hereinafter, details of control of the in-vehicle imaging unit 114 by the imaging control unit 112 will be described.

When an event has been detected by the event detection unit 111, the imaging control unit 112 switches the imaging conditions of the in-vehicle imaging unit 114 which captures images of the rear area of the vehicle, including the interior thereof, from the imaging conditions appropriate for the environment inside the vehicle to the imaging conditions appropriate for the environment outside the vehicle.

Brightness inside a vehicle and that outside the vehicle are normally different from each other. Further, the degree of brightness inside and outside the vehicle will differ depending on the weather and the time of day. As the imaging area becomes brighter, the diaphragm of the in-vehicle imaging unit 114 needs to be narrowed, the shutter speed thereof needs to be shortened, and the sensitivity thereof needs to be lowered. Further, as the imaging area becomes darker, the diaphragm of the in-vehicle imaging unit 114 needs to be widened, the shutter speed thereof needs to be lengthened, and the sensitivity thereof needs to be increased.

In order to achieve the above operation, when the imaging control unit 112 switches the imaging conditions of the in-vehicle imaging unit 114 which captures images of the rear area of the vehicle, including the interior thereof, from the imaging conditions appropriate for the environment inside the vehicle to the imaging conditions appropriate for the environment outside the vehicle, the imaging control unit 112 adjusts the exposure of the in-vehicle imaging unit 114 by controlling the diaphragm, the shutter speed, the sensitivity and the like of the in-vehicle imaging unit 114. Accordingly, the in-vehicle imaging unit 114 is able to capture a scene in the rear of the vehicle more clearly.

Specifically, when the imaging control unit 112 captures images focusing on the area inside the vehicle, the imaging control unit 112 detects the face of the driver using a face recognition function from the video images captured by the in-vehicle imaging unit 114, acquires the average value of the luminance of the face area of the driver that has been detected, and adjusts the exposure of the in-vehicle imaging unit 114 in such a way that the average value of the luminance becomes optimal. Alternatively, when there are a plurality of passengers, the imaging control unit 112 may acquire the average value of the luminance of each of the face areas of the plurality of respective passengers, and adjust the exposure of the in-vehicle imaging unit 114 in such a way that the average value of the luminance becomes optimal. In another alternative, the imaging control unit 112 may identify and detect objects (e.g., a sheet) other than persons by an object detection function, and adjust the exposure of the in-vehicle imaging unit 114 in such a way that the average value of the luminance of each of the persons and the objects that have been detected becomes optimal.

On the other hand, when the imaging control unit 112 captures images focusing on the area outside the vehicle (the rear of the vehicle), the imaging control unit 112 identifies and detects objects such as the rear glass or the side glass from the video images captured by the in-vehicle imaging unit 114 using the object detection function, acquires the average value of the luminance of an area including the detected objects (e.g., rear glass), and adjusts the exposure of the in-vehicle imaging unit 114 in such a way that the average value of the luminance becomes optimal. Alternatively, the imaging control unit 112 may adjust the exposure of the in-vehicle imaging unit 114 in such a way that the average value of the luminance of the objects outside the vehicle across the rear glass or the side glass becomes optimal or may adjust the exposure of the in-vehicle imaging unit 114 in such a way that each of the average value of the luminance of the rear glass or the side glass and the average value of the luminance of objects outside the vehicle becomes optimal. Instead of detecting the objects such as the rear glass or the side glass using the object detection function, an area including the objects such as the rear glass or the side glass may be manually specified when a driver monitoring system (DMS) is adjusted and this area may be recorded as a target whose average value of the luminance is to be acquired.

Further, when an event has been detected by the event detection unit 111, the imaging control unit 112 may switch the imaging direction of the front imaging unit 113 that has captured images in the rear area of the vehicle, including the interior thereof, to the imaging direction in accordance with the content of the event that has occurred.

For example, when the misapplication prevention operation has been performed by the misapplication prevention apparatus 12 while the driver is parking his/her vehicle in a garage, the imaging control unit 112 may switch the imaging direction of the in-vehicle imaging unit 114 in such a way that the area between the own vehicle and the side wall or the like of the garage is included in the imaging area. Alternatively, when the misapplication prevention operation has been performed by the misapplication prevention apparatus 12 during traveling, the imaging control unit 112 may switch the imaging direction of the in-vehicle imaging unit 114 in such a way that at least the area between the own vehicle and another vehicle traveling near the own vehicle is included in the imaging area.

The recording control unit 115 causes the recording unit 116 to record the video images captured by each of the front imaging unit 113 and the in-vehicle imaging unit 114. The video images captured by the in-vehicle imaging unit 114 when an event has been detected by the event detection unit 111 (e.g., video images in the rear of the vehicle) may be recorded in a write-protected storage area in the storage area of the recording unit 116.

While the description has been made taking a case in which the recording unit 116 is embedded in the dashboard camera 11 in this embodiment, this is merely an example and the recording unit 116 may be provided outside the dashboard camera 11.

### (Operation of dashboard camera 11)

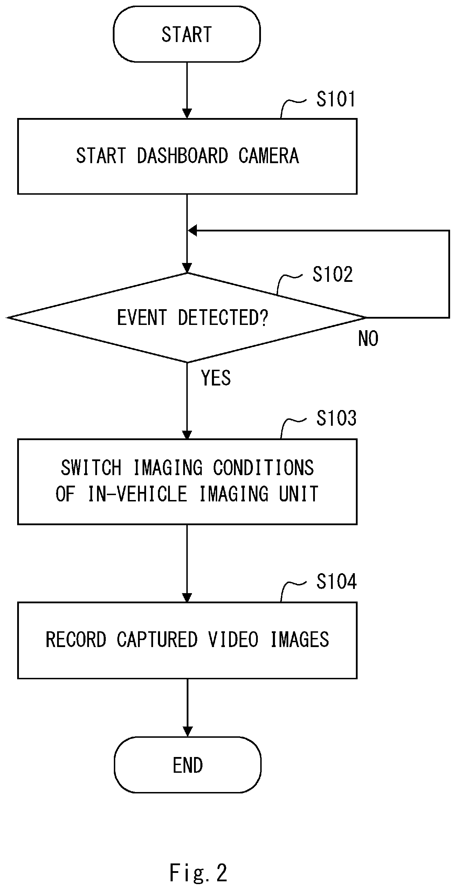

Next, with reference to Fig. 2, a flow of an operation of the dashboard camera 11 will be briefly described.

Fig. 2 is a flowchart showing the operation of the dashboard camera 11.

First, the dashboard camera 11 is started (Step S101). Accordingly, the event detection unit 111 starts executing event detection processing (Step S102). If an event (abnormality) that has occurred in the own vehicle is not detected by the event detection unit 111 (NO in Step S102), the event detection unit 111 waits until an event is detected. When an event (abnormality) that has occurred in the own vehicle is detected by the event detection unit 111 (YES in Step S102), the imaging control unit 112 switches the imaging conditions of the in-vehicle imaging unit 114 which captures images of the rear area of the vehicle, including the interior thereof, from the imaging conditions appropriate for the environment inside the vehicle to the imaging conditions appropriate for the environment outside the vehicle (Step S103). Then, the recording control unit 115 causes the recording unit 116 to record the video images captured by each of the front imaging unit 113 and the in-vehicle imaging unit 114 (Step S104).

As described above, the dashboard camera 11 and the in-vehicle monitoring system 1 on which the dashboard camera 11 is mounted according to this embodiment switch the imaging conditions of the in-vehicle imaging unit 114 which captures images of the rear area of the vehicle, including the interior thereof, at normal times from the imaging conditions appropriate for the environment inside the vehicle to the imaging conditions appropriate for the environment outside the vehicle at the time of an abnormality. It is therefore possible to effectively capture a scene outside the vehicle.

### <Modified example of in-vehicle monitoring system 1>

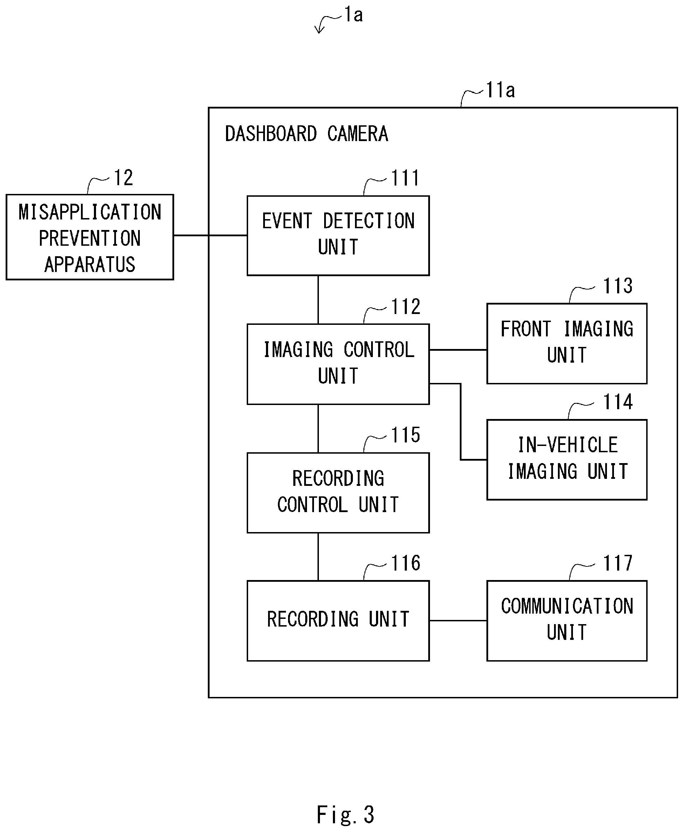

Fig. 3 is a block diagram showing a modified example of the in-vehicle monitoring system 1 as an in-vehicle monitoring system 1a. The in-vehicle monitoring system 1a includes a dashboard camera 11a in place of the dashboard camera 11 which is provided in the in-vehicle monitoring system 1. The dashboard camera 11a is different from the dashboard camera 11 in that the dashboard camera 11a further includes a communication unit 117.

The communication unit 117, which is configured to be able to communicate with, for example, a communication terminal of an insurance company, transmits captured video images recorded in the recording unit 116 to the communication terminal of the insurance company. Accordingly, the insurance company is able to determine, for example, the cause of occurrence of an accident of the vehicle from the captured video images that have been acquired, whereby it is possible to efficiently calculate the insurance money to be paid for the insurance policy holder (e.g., the owner of the vehicle).

Since the other configurations of the dashboard camera 11a are similar to those in the dashboard camera 11, the descriptions thereof will be omitted.

As described above, with the dashboard camera 11a and the in-vehicle monitoring system 1a on which the dashboard camera 11a is mounted, it is possible to not only obtain effects similar to those in the dashboard camera 11 and the in-vehicle monitoring system 1 on which the dashboard camera 11 is mounted but also transmit the captured video images to an external institution such as an insurance company. Accordingly, the external institution such as the insurance company is able to immediately use the captured video images that have been acquired.

### (Hardware configuration of imaging control function of dashboard camera 11)

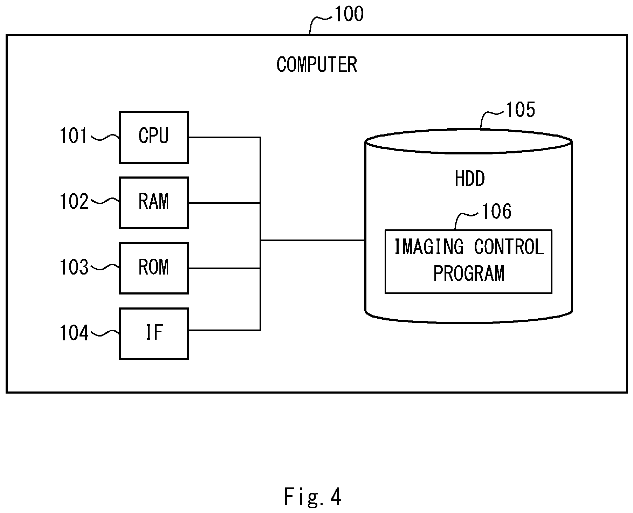

Note that the imaging control processing implemented by the dashboard camera 11 (11a) may be implemented by a general-purpose computer system. Hereinafter, a brief description will be given with reference to Fig. 4.

Fig. 4 is a block diagram showing one example of a hardware configuration of an imaging control function. A computer 100 includes, for example, a Central Processing Unit (CPU) 101, which is a control apparatus, a Random Access Memory (RAM) 102, and a Read Only Memory (ROM) 103. The computer 100 further includes an Inter Face (IF) 104, which is an interface with an external device, and a Hard Disk Drive (HDD) 105, which is one example of a non-volatile storage apparatus. The computer 100 may further include, as components that are not shown, an input device such as a keyboard or a mouse, or a display device such as a display.

The HDD 105 stores an Operating System (OS) (not shown) and an imaging control program 106. The imaging control program 106 is a computer program with which the imaging control processing according to this embodiment is implemented.

The CPU 101 controls various kinds of processing in the computer 100, and the access or the like to the RAM 102, the ROM 103, the IF 104, and the HDD 105. In the computer 100, the CPU 101 loads the OS or the imaging control program 106 stored in the HDD 105 and executes the loaded OS or program. Accordingly, the computer 100 implements the imaging control function of the dashboard camera 11 (11a) according to this embodiment.

While the invention made by the present inventors has been specifically described based on the embodiment, it is needless to say that the present invention is not limited to the embodiment described above and various changes may be made without departing from the spirit of the present invention.

While the present invention has been described as a hardware configuration in the aforementioned embodiment, the present invention is not limited thereto. The present invention may implement desired processing by causing a Central Processing Unit (CPU) to execute a computer program. Further, the aforementioned program may be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), CD-Read Only Memory (ROM), CD-R, CD-R/W, and semiconductor memories (such as mask ROM, Programmable ROM (PROM), Erasable PROM (EPROM), flash ROM, Random Access Memory (RAM), etc.). The program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

While the present application has been described above with reference to the embodiment, the present application is not limited to the above embodiment. Various changes that may be understood by one skilled in the art may be made to the configurations and the details of the present application within the scope of the present invention.

This application is based upon and claims the benefit of priority from Japanese patent application No. 2020-141673, filed on August 25, 2020, the disclosure of which is incorporated herein in its entirety by reference.

### Industrial Applicability

The present invention is suitably applicable to a dashboard camera mounted on a vehicle.

### Reference Signs List

- 1: In-vehicle Monitoring System
- 1a: In-vehicle Monitoring System
- 11: Dashboard Camera
- 11a: Dashboard Camera
- 12: Misapplication Prevention Apparatus
- 100: Computer
- 101: CPU
- 102: RAM
- 103: ROM
- 104: IF
- 105: HDD
- 106: Imaging Control Program
- 111: Event Detection Unit
- 112: Imaging Control Unit
- 113: Front Imaging Unit
- 114: In-vehicle Imaging Unit
- 115: Recording Control Unit
- 116: Recording Unit
- 117: Communication Unit

## Claims

1. A dashboard camera comprising:
an event detection unit configured to detect an event that has occurred in an own vehicle;
an imaging control unit configured to switch, when the event has been detected by the event detection unit, imaging conditions of an imaging apparatus that captures images of an area including the interior of the vehicle from imaging conditions appropriate for the environment inside the vehicle to imaging conditions appropriate for the environment outside the vehicle; and
a recording control unit configured to cause a recording apparatus to record the video images captured by the imaging apparatus.

2. The dashboard camera according to Claim 1, wherein the imaging control unit adjusts, when the event has been detected by the event detection unit, exposure of the imaging apparatus in such a way that the exposure is appropriate for the environment outside the vehicle.

3. The dashboard camera according to Claim 1 or 2, wherein the event detection unit detects occurrence of a misapplication prevention operation performed by a misapplication prevention apparatus that prevents misapplication of at least one of an accelerator and a brake as an event that has occurred in the own vehicle.

4. A method for controlling a dashboard camera, the method comprising the steps of:
detecting an event that has occurred in an own vehicle;
switching, when the event has been detected, imaging conditions of an imaging apparatus that captures images of an area including the interior of the vehicle from imaging conditions appropriate for the environment inside the vehicle to imaging conditions appropriate for the environment outside the vehicle; and
causing a recording apparatus to record the video images captured by the imaging apparatus.

5. An imaging control program for causing a computer to execute processing of:
detecting an event that has occurred in an own vehicle;
switching, when the event has been detected, imaging conditions of an imaging apparatus that captures images of an area including the interior of the vehicle from imaging conditions appropriate for the environment inside the vehicle to imaging conditions appropriate for the environment outside the vehicle; and
causing a recording apparatus to record the video images captured by the imaging apparatus.
